# EUROPÄISCHE PATENTANMELDUNG

(11) **EP 4 008 490 A1**
(43) Veröffentlichungstag der Anmeldung: **08.06.2022**
(21) Anmeldenummer: 20211645.5
(22) Anmeldetag: 03.12.2020
(51) Int. Cl.: B25F 5/02

(54) **GEHÄUSE ZUR AUFNAHME EINES KOMMUNIKATIONSMODULS**

(71) Anmelder: Andreas Stihl AG & Co. KG, 71336 Waiblingen (DE)
(72) Erfinder: Pickhart, Moritz, 70374 Stuttgart (DE)
(74) Vertreter: Wasmuth, Rolf

(57) **Zusammenfassung**

Die Erfindung betrifft ein Gehäuse (5, 105, 205) mit einem darin angeordneten Kommunikationsmodul (12). Unter einem Verschlussdeckel (10, 110, 210) des Gehäuses (5, 105, 205) sind elektrische Kontakte (17) vorgesehen, die elektrisch mit im Gehäuse (5, 105, 205) angeordneten elektrischen Bauelementen kontaktiert sind. Auf die Kontakte (17) ist ein Kommunikationsmodul (12) aufgelegt, welches in einer gehäusefesten Aufnahme (20) lagefixiert ist. Dabei liegen Kontaktelemente (14) des Kommunikationsmoduls (12) auf den Kontakten (17) im Gehäuse (5, 105, 205) elektrisch kontaktierend auf. Das Kommunikationsmodul (12) ist mit zumindest einem Druckelement (16) auf die Kontakte (17) aufgedrückt, wobei das Druckelement (16) zwischen dem Verschlussdeckel (10, 110, 210) und dem Kommunikationsmodul (12) angeordnet ist.

## Beschreibung

Die Erfindung betrifft allgemein ein Gehäuse, insbesondere ein Gehäuse für einen Akkupack, ein Gehäuse für ein handgeführtes Arbeitsgerät oder ein Gehäuse für ein handgetragenes Arbeitsgerät oder dergleichen Gehäuse. Unter einem Verschlussdeckel des Gehäuses sind elektrische Kontakte vorgesehen, die elektrisch mit in dem Gehäuse angeordneten elektrischen Bauelementen kontaktiert sind.

Moderne Arbeitsgeräte, unabhängig davon, ob sie von einem Elektromotor, einem akkubetriebenen Elektromotor oder einem Verbrennungsmotor angetrieben werden, sind mit Datenspeichern oder dergleichen Bauteilen ausgerüstet, um die im Betrieb anfallenden Betriebsdaten zu erfassen und, insbesondere für eine spätere Wartung, auszuwerten. Über die erfassten Betriebsdaten können im Service aufgetretene oder mit hoher Wahrscheinlichkeit in Zukunft auftretende Fehler erkannt und entsprechende Gegenmaßnahmen eingeleitet werden. Treten im Betrieb eines Arbeitsgerätes hingegen unzulässige Betriebszustände auf, werden die dabei generierten Daten zwar erfasst, Gegenmaßnahmen zum Schutze des Antriebsmotors oder des Werkzeugs können mangels Auswertung der generierten Daten häufig nur verspätet eingeleitet werden.

Der Erfindung liegt die Aufgabe zugrunde, die während des Betriebs einer Vorrichtung anfallenden Daten zeitnah auszugeben, damit frühzeitig geeignete Eingriffe zum Schutz der Vorrichtung möglich werden.

Die Aufgabe wird erfindungsgemäß nach den Merkmalen des Anspruchs 1 gelöst. Auf die unter einem Verschlussdeckel des Gehäuses vorgesehenen elektrischen Kontakte wird ein Kommunikationsmodul aufgelegt, wobei das Kommunikationsmodul ein selbstständiges Bauteil bildet. Von besonderem Vorteil ist, dass das Kommunikationsmodul nur bei Bedarf eingebaut werden kann, wobei der Einbau im Rahmen eines Service von geschulten Servicemitarbeitern erfolgen kann. Aufgrund des einfachen Aufbaus kann der Einbau in das Gehäuse aber auch von einem ungeschulten Benutzer wie dem Endkunden ausgeführt werden. Das Kommunikationsmodul wird in einfacher Weise mittels einer gehäusefesten Aufnahme im Gehäuse positioniert und lagefixiert.

Das Kommunikationsmodul weist eine den Kontakten im Gehäuse zugewandt liegende Kontaktseite mit auf der Kontaktseite vorgesehenen Kontaktelementen auf. Mit Einsetzen in die gehäusefeste Aufnahme kommen die Kontaktelemente des Kommunikationsmoduls auf den Kontakten im Gehäuse elektrisch kontaktierend zur Auflage. Um einerseits die Fixierung des Kommunikationsmoduls in der gehäusefesten Aufnahme zu gewährleisten und andererseits eine sichere elektrische Kontaktanlage zwischen den Kontakten im Gehäuse und den Kontaktelementen des Kommunikationsmoduls zu gewährleisten, ist vorgesehen, zwischen dem Verschlussdeckel und dem Kommunikationsmodul ein Druckelement vorzusehen. Bei geschlossenem Verschlussdeckel übt das Druckelement auf das Kommunikationsmodul eine Druckkraft aus, wodurch das Kommunikationsmodul auf die Kontakte des Gehäuses aufgedrückt wird.

Das Kommunikationsmodul steht drahtlos mit einer äußeren Sende- und/oder Empfangseinheit in Verbindung. Eine derartige Sende- und/oder Empfangseinheit kann zum Beispiel ein Smartphone, ein Tablet oder eine speziell für die Kommunikation mit dem Kommunikationsmodul ausgebildete Sende- und/oder Empfangseinheit sein. Ein Benutzer eines Arbeitsgerätes kann so während des Betriebs die Antriebseinheit und/oder das Werkzeug anhand der über das Kommunikationsmodul ausgegebenen Daten überwachen und bei Bedarf eingreifen.

Das ein eigenständiges Bauteil bildende Kommunikationsmodul hat eine im Wesentlichen rechteckige Grundform mit einer Längsachse, wobei die Kontaktelemente des Kommunikationsmoduls insbesondere symmetrisch zur Längsachse des Kommunikationsmoduls angeordnet sind. Dabei sind die Kontaktelemente des Kommunikationsmoduls vorzugsweise als Kontaktfedern ausgebildet. Andere Ausbildungen der Kontaktelemente können vorteilhaft sein. So ist es auch vorteilhaft, wenn z. B. alternativ die unter dem Verschlussdeckel vorgesehenen elektrischen Kontakte als Kontaktfedern ausgebildet sind. Auch kann eine Ausbildung zweckmäßig sein, bei der sowohl einige der unter dem Verschlussdeckel vorgesehenen elektrischen Kontakte als Kontaktfedern ausgebildet sind und einige der Kontaktelemente des Kommunikationsmoduls als Kontaktfedern ausgebildet sind.

Zur Bildung der gehäusefesten Aufnahme ist zwischen der gehäusefesten Aufnahme und dem Kommunikationsmodul zumindest ein mechanisches Eingriffselement vorgesehen. Das mechanische Eingriffselement ist derart ausgebildet, dass es das Kommunikationsmodul gehäusefest fixiert. Dies kann durch ein gehäusefestes Eingriffselement erfolgen, welches in eine entsprechende Eingriffsöffnung des Kommunikationsmoduls eingreift. Alternativ kann das Kommunikationsmodul ein mechanisches Eingriffselement aufweisen, welches in eine entsprechende Eingriffsöffnung der Aufnahme in dem Aufnahmeraum eingreift. In beiden Fällen ist durch den mechanischen Eingriff des Eingriffselementes in der Ebene des Kommunikationsmoduls eine formschlüssige Fixierung erzielt.

Ein Eingriffselement kann vorteilhaft durch einen in eine Zentrieröffnung eingreifenden Zentrierstift gebildet sein. Dabei ist insbesondere vorgesehen, dass das Bauteil des Kommunikationsmoduls die Zentrieröffnung aufweist und der Zentrierstift gehäusefest im Gehäuse, zweckmäßig in der Aufnahme, gehalten ist.

In besonderer Ausgestaltung der Erfindung weist das Bauteil des Kommunikationsmoduls eine erste Zentrieröffnung für einen ersten Zentrierstift und eine zweite Zentrieröffnung für einen zweiten Zentrierstift auf. Durch die Anordnung von zwei mit einem Abstand zueinander liegenden Zentrierstiften ist eine Ausrichtung der Lage des Kommunikationsmoduls erzielt.

Das Bauteil des Kommunikationsmoduls weist eine rechteckige Grundform mit einer Längsachse auf, wobei die Zentrieröffnung auf der Längsachse des Kommunikationsmoduls liegt. Insbesondere sind zwei Zentrieröffnungen vorgesehen, wobei je eine Zentrieröffnung im Bereich einer Schmalseite des Kommunikationsmoduls liegt. Beide Zentrieröffnungen liegen im Bereich gegenüberliegender Schmalseiten des Bauteils des Kommunikationsmoduls.

In besonderer Ausgestaltung der Erfindung ist vorgesehen, dass eine Zentrieröffnung zur Schmalseite des Kommunikationsmoduls hin offen ist. Dadurch wird die Möglichkeit geschaffen, einen Zentrierstift auch radial in die Zentrieröffnung einzuführen.

Das zwischen dem Bauteil des Kommunikationsmoduls und dem Verschlussdeckel vorgesehene Druckelement ist insbesondere ein kompressibler Körper. In einer einfachen Ausführungsform ist das Druckelement ein elastomerer Körper, zum Beispiel ein Schaumstoff, insbesondere ein Körper aus dem Material Cellasto ^{®} (Marke der BASF). Es kann auch zweckmäßig sein, als Druckelement eine Federzunge, eine Spiralfeder oder dergleichen Federelement anzuordnen.

Ist das Kommunikationsmodul in dem Deckel eines Akkupacks angeordnet, können die gehäusefesten Kontakte auf einer Platine angeordnet sein, die den Akkupack verschließt. Die Platine weist eine einem Innenraum des Gehäuses zugewandt liegende innere Platinenseite und eine dem Innenraum abgewandt liegende äußere Platinenseite auf. Die gehäusefesten Kontakte sind dabei auf der äußeren Platinenseite vorgesehen. Diese Anordnung gewährleistet eine einfache elektrische Verbindung zwischen der Platine und dem Kommunikationsmodul, so dass zusätzliche Leitungsführungen entfallen können. Über die gehäusefesten Kontakte der Platine können nicht nur Daten übertragen werden, sondern auch die elektrische Spannungsversorgung des Kommunikationsmoduls gewährleistet werden.

Die auf der äußeren Platinenseite vorgesehenen Kontakte sind zusammengefasst als Kontaktfeld der Platine ausgebildet.

Der Innenraum des Gehäuses bildet einen Aufnahmeraum für einen Zellverbund, der durch eine auf der Platine angeordnete Überwachungseinrichtung während dem Ladebetrieb und dem Entladebetrieb überwacht wird. Hierzu ist die Überwachungseinrichtung elektrisch mit dem Zellverbund des Akkupacks verbunden.

Weitere Merkmale der Erfindung ergeben sich aus den weiteren Ansprüchen, der nachfolgenden Beschreibung und der Zeichnung, in der verschiedene Ausführungsbeispiele der Erfindung beispielhaft dargestellt sind.

Die in den Ansprüchen angegebenen Merkmale und die in den nachfolgend beschriebenen Ausführungsbeispielen der Erfindung wiedergegebenen Merkmale sind im Rahmen der Erfindung auch einzeln untereinander kombinierbar sind. Die sich aus den Ansprüchen ergebende Kombination der Merkmale sind nur Beispiele der beschriebenen Erfindung. Die Merkmale der Ansprüche sind auch untereinander frei kombinierbar.

In den Zeichnungen sind dargestellt:
- Fig. 1: eine perspektivische Darstellung eines Gehäuses am Beispiel eines Akkupacks zur Aufnahme von Akkuzellen,
- Fig. 2: in perspektivischer, vergrößerter Darstellung der Gehäusedeckel des Gehäuses eines Akkupacks nach Fig. 1 mit einem durch einen Verschlussdeckel zu verschließenden Aufnahmeraum für ein Kommunikationsmodul,
- Fig. 3: ein Schnitt durch den im Gehäusedeckel ausgebildeten Aufnahmeraum mit einer Aufnahme für ein Kommunikationsmodul,
- Fig. 4: eine Draufsicht auf den im Gehäusedeckel ausgebildeten Aufnahmeraum für ein Kommunikationsmodul,
- Fig. 5: eine Draufsicht auf das in dem Aufnahmeraum im Gehäusedeckel in einer Aufnahme gehaltene Kommunikationsmodul,
- Fig. 6: eine Draufsicht auf ein Kommunikationsmodul,
- Fig. 7: eine Draufsicht auf die Kontaktseite des Kommunikationsmoduls,
- Fig. 8: eine perspektivische Ansicht auf den Gehäusedeckel nach Fig. 2 mit einem im Aufnahmeraum in einer Aufnahme gehaltenen Kommunikationsmodul,
- Fig. 9: ein Schnitt durch den Gehäusedeckel nach Fig. 8 mit in einer Aufnahme im Aufnahmeraum gehaltenem Kommunikationsmodul,
- Fig. 10: in perspektivischer Darstellung ein Schnitt durch den Gehäusedeckel mit einem durch den Verschlussdeckel geschlossenen Aufnahmeraum und einem darin gehaltenen Kommunikationsmodul,
- Fig. 11: in Draufsicht der Schnitt nach Fig. 10 durch einen Gehäusedeckel mit einem in dem Aufnahmeraum in einer Aufnahme gehaltenen Kommunikationsmodul,
- Fig. 12: in perspektivischer Darstellung ein handgeführtes Arbeitsgerät am Beispiel eines Blasgerätes mit einem Gehäuse und einem in dem Gehäuse ausgebildeten, durch einen Verschlussdeckel verschlossenen Aufnahmeraum für ein Kommunikationsmodul,
- Fig. 13: in vergrößerter Darstellung der durch einen Verschlussdeckel verschlossene Aufnahmeraum im Gehäuse des Arbeitsgerätes nach Fig. 12,
- Fig. 14: in vergrößerter Darstellung entsprechend Fig. 13 ein offener Aufnahmeraum mit dem darin angeordneten Kommunikationsmodul,
- Fig. 15: in vergrößerter Darstellung entsprechend Fig. 13 der Aufnahmeraum für ein Kommunikationsmodul mit einem im Boden des Aufnahmeraums vorgesehenen Kontaktfeld,
- Fig. 16: in perspektivischer Darstellung ein handgetragenes Arbeitsgerät am Beispiel einer Motorkettensäge mit einem Gehäuse und einem in dem Gehäuse ausgebildeten, durch einen Verschlussdeckel verschlossenen Aufnahmeraum für ein Kommunikationsmodul,
- Fig. 17: in vergrößerter Darstellung der durch einen Verschlussdeckel verschlossene Aufnahmeraum im Gehäuse des Arbeitsgerätes nach Fig. 16,
- Fig. 18: in vergrößerter Darstellung entsprechend Fig. 17 ein offener Aufnahmeraum mit dem darin angeordneten Kommunikationsmodul,
- Fig. 19: in vergrößerter Darstellung entsprechend Fig. 17 der Aufnahmeraum für ein Kommunikationsmodul mit einem im Boden des Aufnahmeraums vorgesehenen Kontaktfeld.

Die Erfindung betrifft allgemein ein Gehäuse 5, insbesondere ein Gehäuse für einen Akkupack 1, ein Gehäuse für ein handgeführtes Arbeitsgerät wie z. B. einen Rasenmäher oder ein anderes bodengeführtes Arbeitsgerät oder aber ein Gehäuse 101, 102 für ein handgeführtes und handgetragenes Arbeitsgerät wie z. B. ein Blasgerät, eine Motorkettensäge, eine Heckenschere, ein Freischneider oder dgl. Arbeitsgerät.

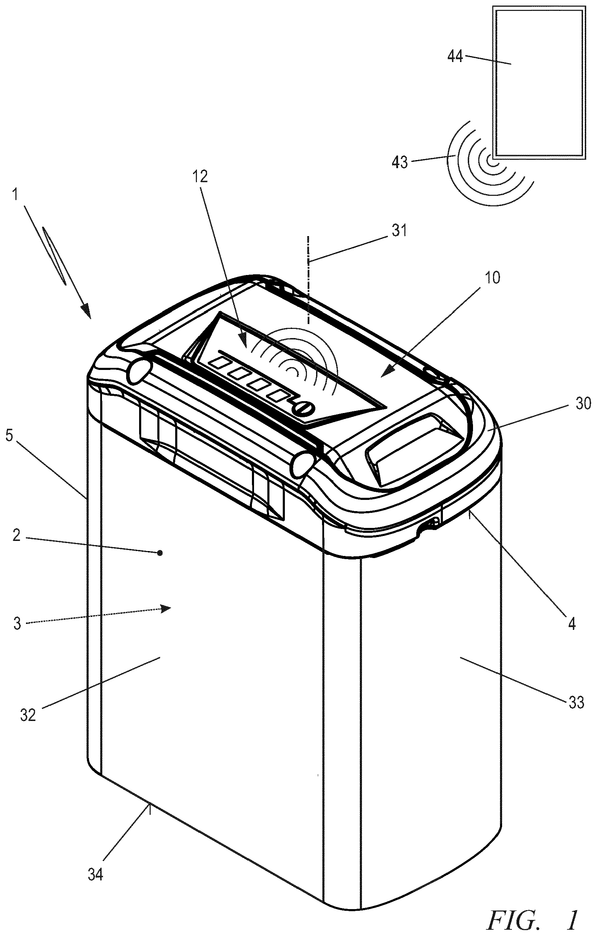

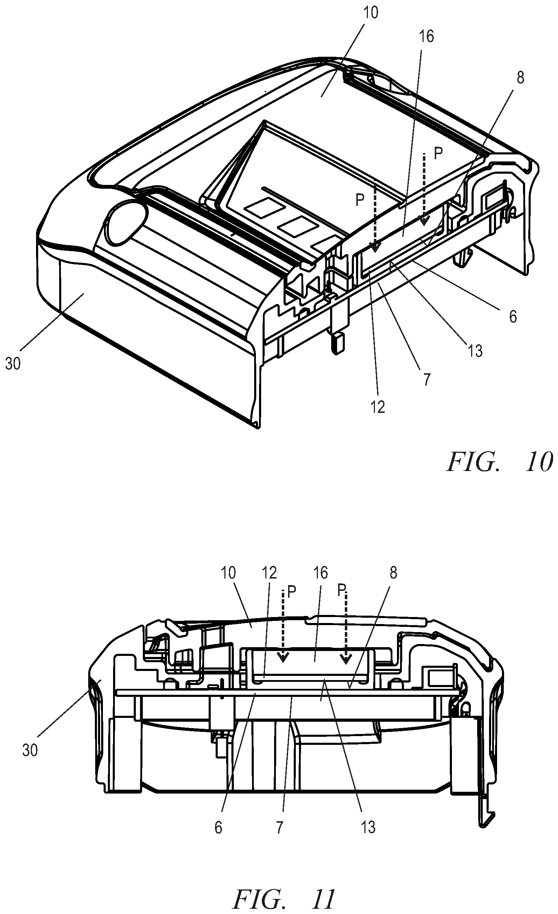

In einem ersten Ausführungsbeispiel ist in den Fig. 1 bis 11 die Erfindung am Beispiel eines Gehäuses 5 für einen Akkupack 1 beschrieben. Im dargestellten Ausführungsbeispiel nach Fig. 1 hat das Gehäuse 5 eine Grundform, die vorzugsweise ähnlich einem Quader ausgebildet ist. In Richtung einer Hochachse 31 der Grundform des Akkupacks 1 verlaufen Breitseiten 32 und Schmalseiten 33. Eine erste Stirnseite des Gehäuses 5 bildet einen Boden 34 des Akkupacks 1, in dem nicht näher dargestellte Kontakte zum elektrischen Laden und zur elektrischen Leistungsabgabe vorgesehen sind. Die dem Boden 34 gegenüberliegende Stirnseite des Gehäuses 5 bildet eine offene Gehäuseseite 4, die insbesondere durch einen Gehäusedeckel 30 verschlossen sein kann.

Über die offene Gehäuseseite 4 ist der Innenraum 2 des Gehäuses 5 zugänglich. In dem Innenraum 2 sind nicht näher dargestellte Akkuzellen angeordnet, die zur Bereitstellung einer gewünschten elektrischen Leistung zu einem Zellverbund 3 miteinander verschaltet sind.

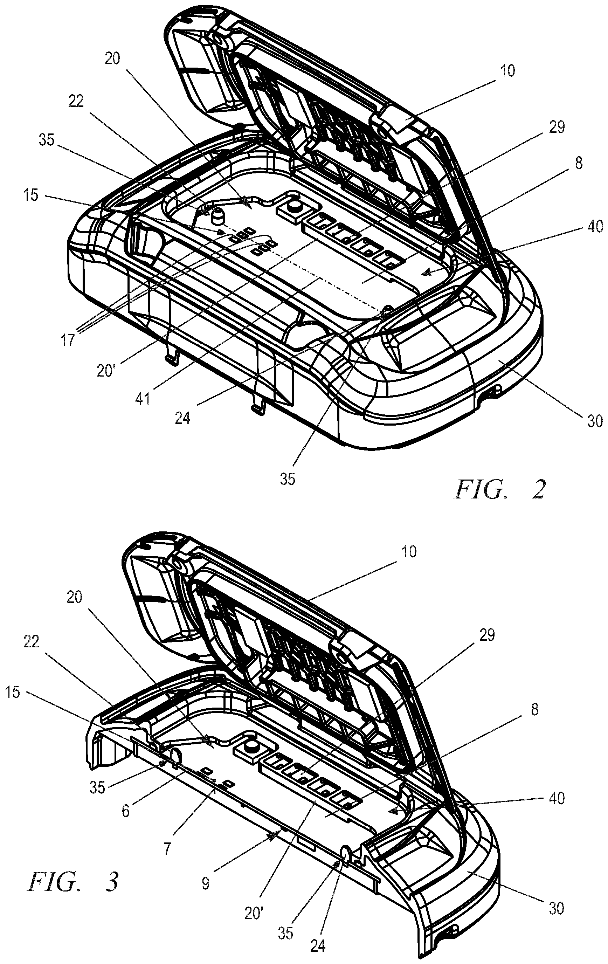

Im Gehäusedeckel 30 ist eine Platine 6 (Fig. 3) gehalten, die eine dem Innenraum 2 des Gehäuses 5 zugewandt liegende innere Platinenseite 7 sowie eine dem Innenraum 2 abgewandt liegende äußere Platinenseite 8 aufweist. Zweckmäßig ist die Platine 6 derart ausgebildet und angeordnet, dass die Platine 6 den Innenraum 2 des Gehäuses 5 verschließt.

Durch den Gehäusedeckel 30 und/oder die Platine 6 ist der Innenraum 2 mit den darin angeordneten Akkuzellen des Zellverbundes 3 vorzugsweise flüssigkeitsdicht und/oder insbesondere gasdicht abgedichtet. Als Berstschutz ist ein nicht näher dargestelltes Überdruckventil vorgesehen, welches zweckmäßig in der Platine 6 gehalten ist und den Innenraum 2 des Gehäuses 5 nach außen entlüftet. Es kann zweckmäßig sein, dass das Überdruckventil den Innenraum 2 des Gehäuses 5 in einen Aufnahmeraum 40 in den Gehäusedeckel 30 entlüftet.

Auf der Platine 6, insbesondere auf der inneren Platinenseite 7, ist eine elektronische Überwachungseinrichtung 9 zur Überwachung des Zellverbundes 3 angeordnet. Die Akkuzellen des Zellverbundes 3, die vorzugsweise als Lithium-Ionen-Zellen ausgebildet sind, werden über die elektronische Überwachungseinrichtung 9 sowohl im Ladebetrieb als auch im Leistungsbetrieb (Entladebetrieb) überwacht.

Wie den Fig. 2 bis Fig. 5 und 8 bis 11 zu entnehmen ist, ist im Gehäusedeckel 30 ein Aufnahmeraum 40 für ein Kommunikationsmodul 12 vorgesehen. Der Aufnahmeraum 40 ist durch einen Verschlussdeckel 10 zu verschließen.

Das Kommunikationsmodul 12 ist zur insbesondere drahtlosen Kommunikation mit zumindest einer im Umfeld des Gehäuses 5 vorgesehenen Sende- und/oder Empfangseinheit 44 ausgebildet. Eine derartige Sende- und/oder Empfangseinheit 44 kann zum Beispiel ein Smartphone, ein Tablet oder eine speziell für die Kommunikation mit dem Kommunikationsmodul 12 ausgebildete Sende- und/oder Empfangseinheit 44 sein.

Die drahtlose Verbindung zwischen dem Kommunikationsmodul 12 und der Sende-und/oder Empfangseinheit 44 kann eine Funkverbindung 43 sein. So kann eine GSM-Verbindung ebenso zweckmäßig sein wie vorzugsweise eine Bluetooth Verbindung, insbesondere eine WLAN Verbindung zum Beispiel im 2,4 GHz oder 5 GHz Bereich oder vorzugsweise eine NFC Verbindung (Near Field Communication) oder eine andere zweckmäßige Funkverbindung 43.

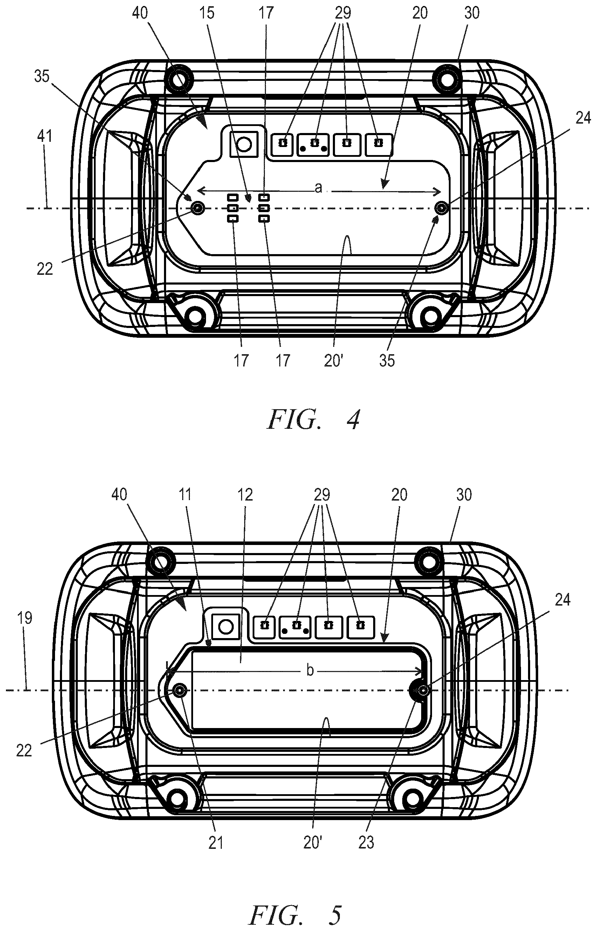

In den Fig. 2 bis Fig. 4 ist der im Gehäusedeckel 30 ausgebildete Aufnahmeraum 40 dargestellt. Der Aufnahmeraum 40 ist zwischen der Platine 6 und dem Verschlussdeckel 10 ausgebildet. Der Boden des Aufnahmeraums 40 ist insbesondere von der Platine 6 gebildet. Die äußere Platinenseite 8 liegt dem Verschlussdeckel 10 zugewandt. Die Platine 6 trägt ein Kontaktfeld 15 aus mehreren Kontakten 17. Ferner ist in dem Aufnahmeraum 40 zumindest ein Zentrierstift 22 vorgesehen, der Teil einer Aufnahme 20 für das Kommunikationsmodul 12 ist. Im gezeigten Ausführungsbeispiel ist die Aufnahme 20 ferner durch einen Rahmen 20' begrenzt, der das Kontaktfeld 15 und einen ersten Zentrierstift 22 sowie einen zweiten Zentrierstift 24 umgibt. Wie insbesondere Fig. 4 zeigt, hat die Aufnahme 20 die Grundform eines Rechtecks mit einer Längsachse 41. Die Längsachse 41 ist insbesondere eine Längsmittelachse und teilt in Draufsicht nach Fig. 4 die Aufnahme 20 mittig.

Das Kontaktfeld 15 liegt symmetrisch zur Längsachse 41. Zwei Kontakte 17 liegen mit Abstand zueinander auf der Längsachse 41. In Draufsicht beidseitig der Längsachse 41 liegen je zwei weitere Kontakte 17, so dass ein zur Längsachse 41 symmetrisches Kontaktfeld 15 aus sechs Kontakten 17 gebildet ist.

Im Bereich der Schmalseiten der Aufnahme 20 ist zumindest ein Eingriffselement 35 vorgesehen, das insbesondere als Zentrierstift 22 bzw. 24 ausgebildet sein kann. Im gezeigten Ausführungsbeispiel sind zwei mit einem Abstand a zueinander liegende Eingriffselemente 35 vorgesehen. Der Abstand a ist kleiner als die Länge b des Kommunikationsmoduls 12. Bevorzugt beträgt der Abstand a 80% bis 95% der Länge 1, insbesondere 88% bis 92% der Länge 1. Die im Ausführungsbeispiel als Zentrierstifte 22 bzw. 24 ausgebildeten Eingriffselemente 35 bilden die Aufnahme 20 zur gehäusefesten Lagefixierung des Kommunikationsmoduls 12. Die Eingriffselemente 35 bzw. die Zentrierstifte 22 und 24 liegen auf der Längsachse 41 der Aufnahme 20. Das Kontaktfeld 15 liegt zwischen den Eingriffselementen 35. Bevorzugt liegt das Kontaktfeld 15 mit einem geringeren Abstand zu dem einen Zentrierstift 22 als zu dem anderen Zentrierstift 24.

Wie aus den Darstellungen der Fig. 2 bis 4 ersichtlich, liegen außerhalb des Rahmens 20' optische Anzeigeelemente 29 der Überwachungseinrichtung 9. Diese optischen Anzeigeelemente 29 sind - wie Fig. 1 zeigt - durch den geschlossenen Verschlussdeckel 10 des Aufnahmeraums 40 sichtbar.

Wie Fig. 5 zeigt, wird das Kommunikationsmodul 12 über die Eingriffselemente 35 in der Aufnahme 20 fixiert gehalten. Die Fixierung des Kommunikationsmoduls 12 erfolgt über die Eingriffselemente 35, im Ausführungsbeispiel über die Zentrierstifte 22 und 24, die in entsprechende Zentrieröffnungen 21 bzw. 23 im Bauteil 11 des Kommunikationsmoduls 12 eingreifen. Dabei bildet das Kommunikationsmodul 12 ein selbstständiges, eigenständiges Bauteil 11.

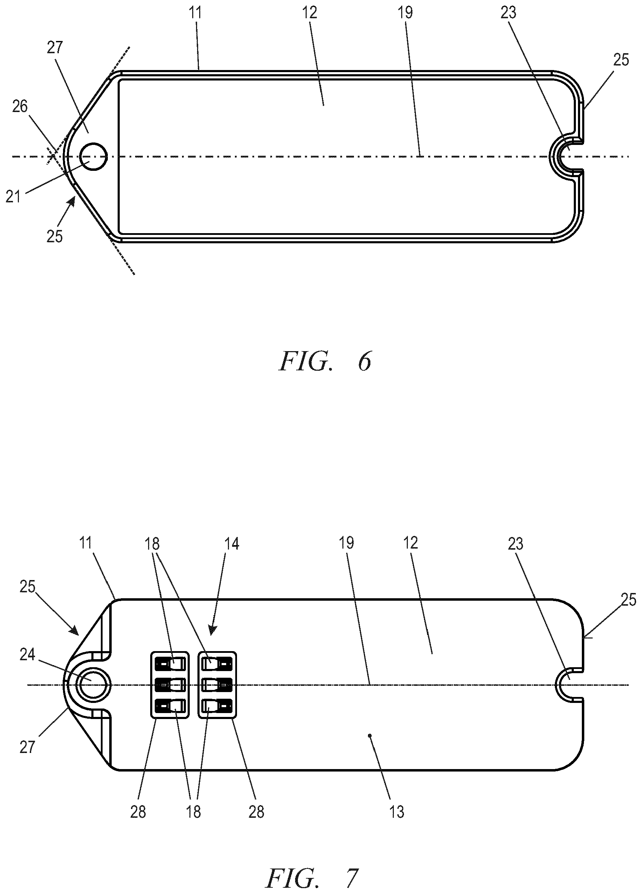

Die körperliche Gestaltung des Kommunikationsmoduls 12 als eigenständiges Bauteil 11 ergibt sich aus den Fig. 6 und 7. Die Grundform des Kommunikationsmoduls 12 ist rechteckig und entspricht insbesondere etwa der rechteckigen Form des Rahmens 20' der Aufnahme 20, wie er zum Beispiel in Fig. 4 in Draufsicht dargestellt ist. Das Kommunikationsmodul 12 hat eine Längsachse 19 (Fig. 6), die insbesondere als Längsmittelachse ausgebildet ist. Die zum Eingriff der als Zentrierstifte 22 und 24 ausgebildeten Eingriffselemente 35 vorgesehenen Zentrieröffnungen 21 und 23 liegen im Bereich der Schmalseiten 25 der Grundform des vorzugsweise rechteckförmigen Kommunikationsmoduls 12. Insbesondere liegen die Zentrieröffnungen 21 und 23 auf der Längsachse 19 des Bauteils 11.

Die eine Zentrieröffnung 23 ist zur Schmalseite 25 des Bauteils 11 offen, so dass ein Zentrierstift 24 auch radial in die Zentrieröffnung 23 eingeführt werden kann. Die andere Zentrieröffnung 21 auf der anderen Schmalseite 25 des Bauteils 11 liegt in einem zweckmäßig nasenförmig ausgebildeten Vorsprung 27. Die Seitenflächen des Vorsprungs 27 schließen einen Winkel 26 von etwa 80 bis 120°, insbesondere 110° ein.

Auf der Kontaktseite 13 (Fig. 7) des Kommunikationsmoduls 12 sind Kontaktelemente 14 vorgesehen, die den Kontakten 17 des Kontaktfeldes 15 in der Aufnahme 20 zugeordnet sind. Die Kontaktelemente 14 sind bevorzugt als Kontaktfedern 18 ausgebildet. Zwei Kontaktfedern 18 liegen mit Abstand zueinander auf der Längsachse 19 des Bauteils 11. In Draufsicht nach Fig. 7 liegen beidseitig der Längsachse 19 je zwei weitere Kontaktfedern 18, so dass insgesamt sechs Kontaktfedern 18 vorgesehen sind. Es sind zwei Kontaktreihen 28 mit Kontaktelementen 14, insbesondere Kontaktfedern 18 ausgebildet, die jeweils symmetrisch zur Längsachse 19 ausgerichtet sind. Es kann zweckmäßig sein, alternativ oder zusätzlich einen, mehrere oder alle Kontakte 17 des Kontaktfeldes 15 als Kontaktfedern auszubilden.

Die Kontaktelemente 14 liegen mit geringerem Abstand zu der einen Zentrieröffnung 21 als zu der anderen Zentrieröffnung 23. Im gezeigten Ausführungsbeispiel liegen die Kontaktelemente 14 mit einem größeren Abstand zu der schlitzförmig ausgebildeten Zentrieröffnung 23.

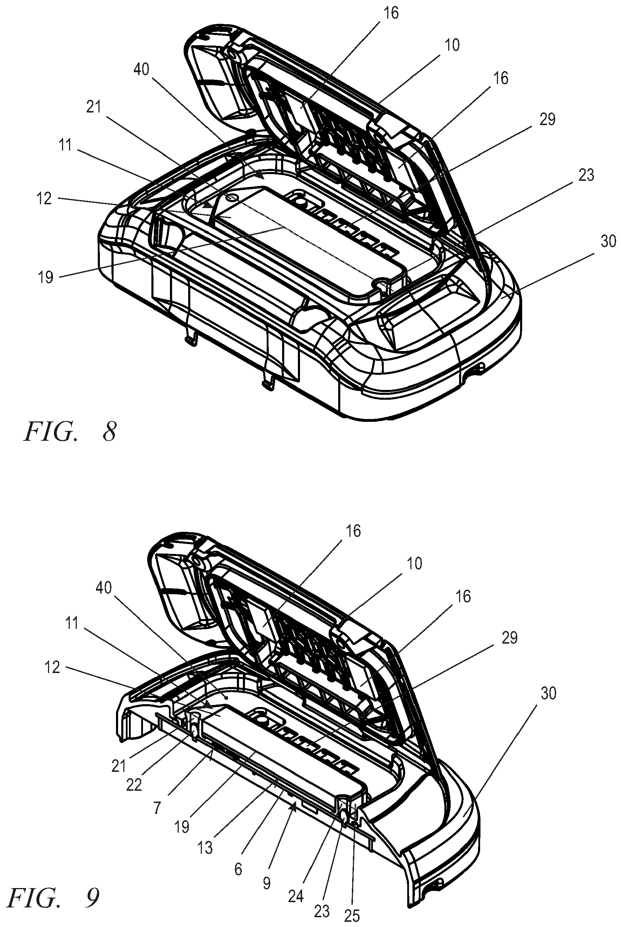

Wie die Fig. 8 und 9 zeigen, wird das Kommunikationsmodul 12 durch Einsetzen in die gehäusefeste Aufnahme 20 im Gehäuse 5 selbst lagefixiert. Zum Einsetzen des Kommunikationsmoduls 12 in den Aufnahmeraum 40 wird die zur Stirnseite 25 offene Zentrieröffnung 23 in Richtung der Längsachse 41 der Aufnahme 20 auf den Zentrierstift 24 aufgeschoben. Liegt der Zentrierstift 24 in der Zentrieröffnung 23, wird das Kommunikationsmodul 12 in die Aufnahme 20 eingeschwenkt und die Zentrieröffnung 21 auf den Zentrierstift 22 aufgesetzt. Das Kommunikationsmodul 12 ist durch die Zentrierstifte 22 und 24 im Gehäuse lagefixiert. Zur Erleichterung der Einführung eines Zentrierstiftes 22, 24 in eine Zentrieröffnung 21, 23 sind die Zentrierstifte 22, 24 zumindest im Bereich ihres freien Endes konisch verjüngt ausgebildet.

In der lagefixierten Stellung innerhalb der Aufnahme 20 ist die elektrische Kontaktierung zwischen dem Kontaktfeld 15 der Aufnahme und den vorzugsweise als Kontaktfedern 18 ausgebildeten Kontaktelementen 14 des Kommunikationsmoduls 12 gewährleistet. Die Ausbildung ist so vorgesehen, dass jeweils ein Kontakt 17 des Kontaktfeldes 15 auf jeweils einem Kontaktelement 14 des Kommunikationsmoduls 12 elektrisch kontaktierend aufliegt. Über die Kontakte 17 und die Kontaktelemente 14 steht das Kommunikationsmodul 12 mit der Überwachungseinrichtung 9 in Verbindung. Einerseits erfolgt über jeweils zwei Kontakte 17 und zwei Kontaktelemente 14 die Energieversorgung des Kommunikationsmoduls 12. Andererseits werden über die weiteren Kontakte 17 und die aufliegenden Kontaktelemente 14 Daten übertragen. Die Datenübertragung ist bidirektional, d. h. es können sowohl Daten von dem Kommunikationsmodul 12 an die Überwachungseinrichtung 9 übertragen werden als auch Daten von der Überwachungseinrichtung 9 auf das Kommunikationsmodul 12. Das Kommunikationsmodul 12 ist ausgebildet, die von der Überwachungseinrichtung 9 erhaltenen Daten über eine Funkverbindung 43 drahtlos einer im Umfeld vorgesehenen Sende- und/oder Empfangseinheit 44 zu übermitteln. Die empfangenen Daten können direkt auf der Sende- und/oder Empfangseinheit 44 angezeigt, ausgewertet, weiterverarbeitet oder über eine weitere Funkverbindung zum Beispiel in einer Cloud abgespeichert werden. Von der Sende- und/oder Empfangseinheit 44 können auch Daten zum Upload zur Verfügung gestellt werden, die in dem Kommunikationsmodul 12 empfangen und an die Überwachungseinrichtung 9 weitergegeben werden. Die empfangenen Daten können in der Überwachungseinrichtung 9 und/oder in dem Kommunikationsmodul 12 weiterverarbeitet und/oder ausgewertet werden. Ist das Kommunikationsmodul 12 in einem Arbeitsgerät verbaut, können Betriebsdaten des Arbeitsgerätes drahtlos nach außen ausgegeben werden und/oder korrigierte Daten über das Kommunikationsmodul 12 zur weiteren Verarbeitung an das Arbeitsgerät übermittelt werden.

In der in den Fig. 5, 8 und 9 gezeigten Montagestellung des Kommunikationsmoduls 12 in der Aufnahme 20 liegen die als Kontaktfedern 18 ausgebildeten Kontaktelemente 14 des Kommunikationsmoduls 12 auf den Kontakten 17 des Kontaktfeldes 15 der Platine 6 elektrisch kontaktierend auf. Das Kommunikationsmodul 12 liegt innerhalb des Rahmens 20'. Wie Figur 5 zeigt, verbleibt zwischen dem Rahmen 20' und dem äußeren Rand des Kommunikationsmoduls 12 ein insbesondere umlaufender Spalt. Die Lagefixierung des Kommunikationsmoduls 12 in der Aufnahme 20 erfolgt vorzugsweise ausschließlich über den formschlüssigen Eingriff eines gehäusefesten Eingriffelementes, im gezeigten Ausführungsbeispiel durch die Zentrierstifte 22 und 24.

Im Rahmen der Erfindung ist auch eine Ausbildung möglich, bei der das selbstständige Bauteil 11 des Kommunikationsmoduls 12 mit einem mechanischen Eingriffelement in eine gehäusefeste Aussparung der Aufnahme 20 eingreift.

Um einerseits eine elektrisch stabile Kontaktierung zwischen den Kontakten 17 in der Aufnahme 20 und den Kontaktelementen 14 des Kommunikationsmoduls 12 zu gewährleisten und andererseits das Kommunikationsmodul 12 in der Aufnahme 20 sicher zu halten, ist vorgesehen, das Kommunikationsmodul 12 durch mindestens ein Druckelement 16 in die Aufnahme 20 zu drücken. Das Druckelement 16 ist vorzugsweise zwischen dem Verschlussdeckel 10 und dem Bauteil 11 des Kommunikationsmoduls 12 angeordnet. Das Druckelement 16 kann vorteilhaft Teil des Verschlussdeckels 10 sein. Zweckmäßig kann das Druckelement auch als getrenntes Bauteil zum Beispiel in Form einer Zwischenlage vorgesehen sein. Ein derartiges eigenständiges Bauteil kann zum Beispiel auf das Kommunikationsmodul 12 aufgelegt werden. Bei Schließen des Verschlussdeckels 10 wird das eigenständige Bauteil bzw. die Zwischenlage komprimiert und dadurch ein Druck auf das Kommunikationsmodul 12 ausgeübt.

Wie den Fig. 8 bis 11 entnommen werden kann, weist der Verschlussdeckel 10 zumindest ein Druckelement 16 auf, welches bei Verschließen des Aufnahmeraums 40 auf dem Bauteil 11 des Kommunikationsmoduls 12 zur Auflage kommt und dieses in die Aufnahme 20 drückt. Im gezeigten Ausführungsbeispiel sind zwei Druckelemente 16 vorgesehen, die jeweils im Bereich der Schmalseiten des Bauteils 11 bei geschlossenem Verschlussdeckel 10 auf das Kommunikationsmodul 12 eine Druckkraft P ausüben.

Das Druckelement 16 kann als Feder ausgebildet sein. Insbesondere ist das Druckelement ein elastomeres Pad. Ein derartiges elastomeres Pad kann zum Beispiel auf die Innenseite des Verschlussdeckels 10 aufgeklebt werden. Insbesondere besteht das Druckelement 16 aus dem Material Cellasto^{®} (eingetragene Marke der Firma BASF).

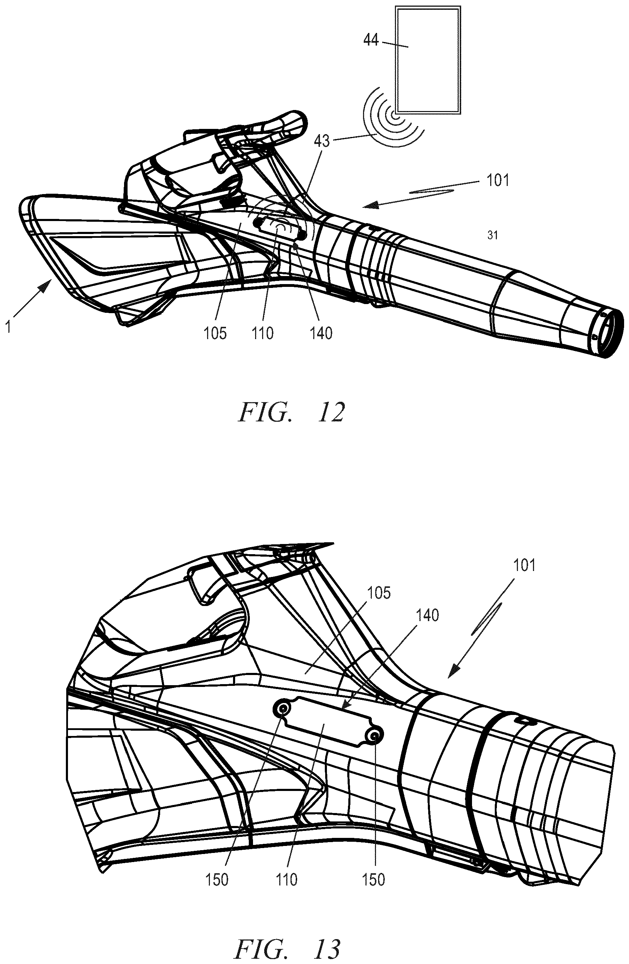

In einem weiteren Ausführungsbeispiel der Erfindung nach den Fig. 12 bis 15 ist das Kommunikationsmodul 12 in einem Aufnahmeraum 140 des Gehäuses 105 eines handgeführten, insbesondere tragbaren Arbeitsgerätes 101 eingesetzt. Das handgeführte, insbesondere tragbare Arbeitsgerät 101 des Ausführungsbeispiels nach Fig. 12 ist ein Blasgerät, insbesondere ein akkubetriebenes Blasgerät. Das Arbeitsgerät kann auch von einem Verbrennungsmotor angetrieben sein.

In dem Gehäuse 105 des Arbeitsgerätes 101 ist der Aufnahmeraum 140 ausgebildet, der durch einen Verschlussdeckel 110 abgedeckt ist. Der Verschlussdeckel 110 wird, insbesondere an gegenüberliegenden Enden, mit jeweils einem Befestigungsmittel 150, vorzugsweise einer Befestigungsschraube, am Gehäuse 105 fixiert, wie in Figur 13 vergrößert dargestellt ist.

Im Aufnahmeraum 140 ist eine Aufnahme 20 ausgebildet, die in Aufbau und Wirkungsweise der Aufnahme 20 der Figuren 1 bis 11 entspricht; gleiche Teile sind mit gleichen Bezugszeichen versehen.

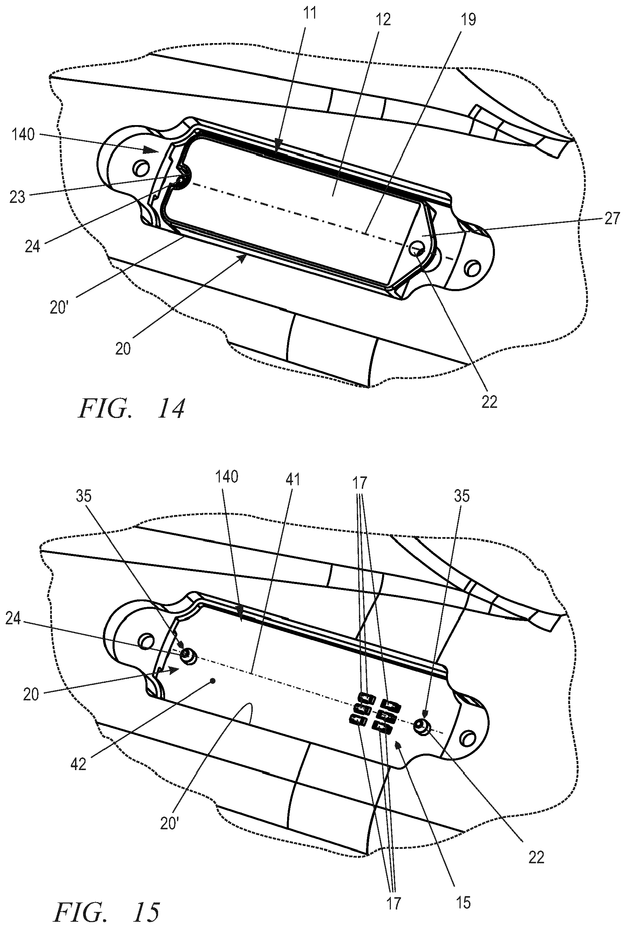

Die Fig. 14 und 15 zeigen den geöffneten Aufnahmeraum 140 des Gehäuses 105. In Figur 15 ist die Aufnahme 20 innerhalb des Aufnahmeraums 140 mit einem äußeren Rahmen 20' dargestellt. Die Lagefixierung des Kommunikationsmoduls 12 in der Aufnahme 20 erfolgt über die vorzugsweise als Zentrierstifte 22 und 24 ausgebildeten, insbesondere gehäusefesten Eingriffselemente 35. Im Boden 42 der Aufnahme 20 ist ein Kontaktfeld 15 mit Kontakten 17 ausgebildet, über die eine elektrische Verbindung mit einer innerhalb des Gehäuses 105 vorgesehenen elektronischen Schaltung hergestellt werden kann. Die elektronische Schaltung kann Leistungsdaten, Betriebsdauer, Restbetriebsdauer, Temperatur des verwendeten Akkupacks 1, die Spannung des Akkupacks und/oder den Betriebsstrom und dergleichen erfassen und an den Kontakten 17 zur Verfügung stellen. Als elektronische Schaltung wird auch eine Zündvorrichtung verstanden, die im Gehäuse eines Arbeitsgerätes mit Verbrennungsmotor vorgesehen ist.

Ein in die Aufnahme 20 eingesetztes Kommunikationsmodul 12 liegt mit seinen Kontaktelementen 14 auf den Kontakten 17 des Kontaktfeldes 15 im Boden 42 der Aufnahme 20 auf. Vorteilhaft sind die Kontaktelemente 14 als Kontaktfedern 18 ausgebildet. Das ein eigenständiges Bauteil 11 bildende Kommunikationsmodul 12 weist Zentrieröffnungen 21 und 23 auf, in die die als Zentrierstifte 22 und 24 ausgebildeten Eingriffselemente 35 eingreifen. Dadurch wird das Kommunikationsmodul 12 innerhalb des Aufnahmeraums 40 und vorzugsweise innerhalb des Rahmens 20' in seiner Lage gehäusefest fixiert.

Der Aufnahmeraum 140 wird nach Einsetzen des Kommunikationsmoduls 12 durch den Verschlussdeckel 110 verschlossen, wobei zwischen dem Verschlussdeckel 110 und dem Kommunikationsmodul 12 ein Druckelement vorgesehen ist. Dieses Druckelement übt nach Festschrauben des Verschlussdeckels 110 eine Druckkraft auf das Bauteil 11 des Kommunikationsmoduls 12 aus, wodurch das Kommunikationsmodul 12 vibrationsfest in der Aufnahme 20 im Aufnahmeraum 140 fixiert ist. Das Druckelement kann ein Schaumstoffpad, ein Federelement oder dergleichen kompressibles Druckelement sein.

Wie in Figur 12 dargestellt, können über das Kommunikationsmodul 12 und die Funkverbindung 43 Daten zwischen dem Kommunikationsmodul 12 im Gehäuse 105 und einer äußeren Sende-und/oder Empfangseinheit 44 ausgetauscht werden. Die Funkverbindung ist insbesondere eine bidirektionale Funkverbindung 43.

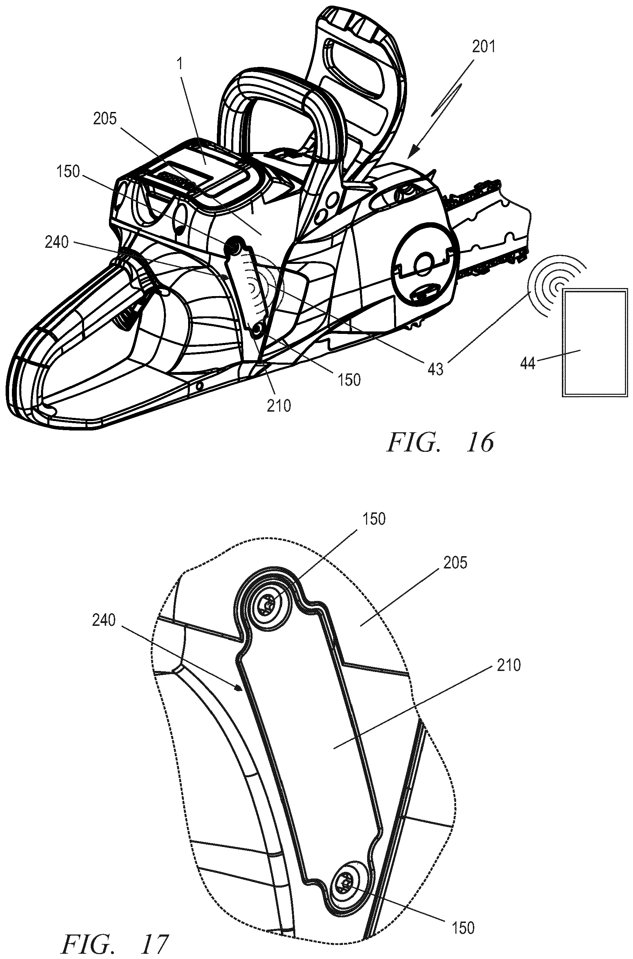

In einem weiteren Ausführungsbeispiel der Erfindung nach den Fig. 16 bis 19 ist das Kommunikationsmodul 12 in einen Aufnahmeraum 240 des Gehäuses 205 eines handgeführten, insbesondere tragbaren Arbeitsgerätes 201 eingesetzt. Das handgeführte, insbesondere tragbare Arbeitsgerät 201 des Ausführungsbeispiels nach Fig. 12 ist eine Motorkettensäge, insbesondere eine akkubetriebene Motorkettensäge. Das Arbeitsgerät kann auch von einem Verbrennungsmotor angetrieben sein.

In dem Gehäuse 205 des Arbeitsgerätes 201 ist der Aufnahmeraum 240 ausgebildet, der durch einen Verschlussdeckel 210 abgedeckt ist. Der Verschlussdeckel 210 wird, insbesondere an gegenüberliegenden Enden, mit jeweils einem Befestigungsmittel 150, vorzugsweise einer Befestigungsschraube, am Gehäuse 205 fixiert, wie in Figur 17 vergrößert dargestellt ist.

Die im Aufnahmeraum 140 ausgebildete Aufnahme 20 entspricht in Aufbau und Wirkungsweise der Aufnahme 20 der Figuren 1 bis 11; gleiche Teile sind mit gleichen Bezugszeichen versehen.

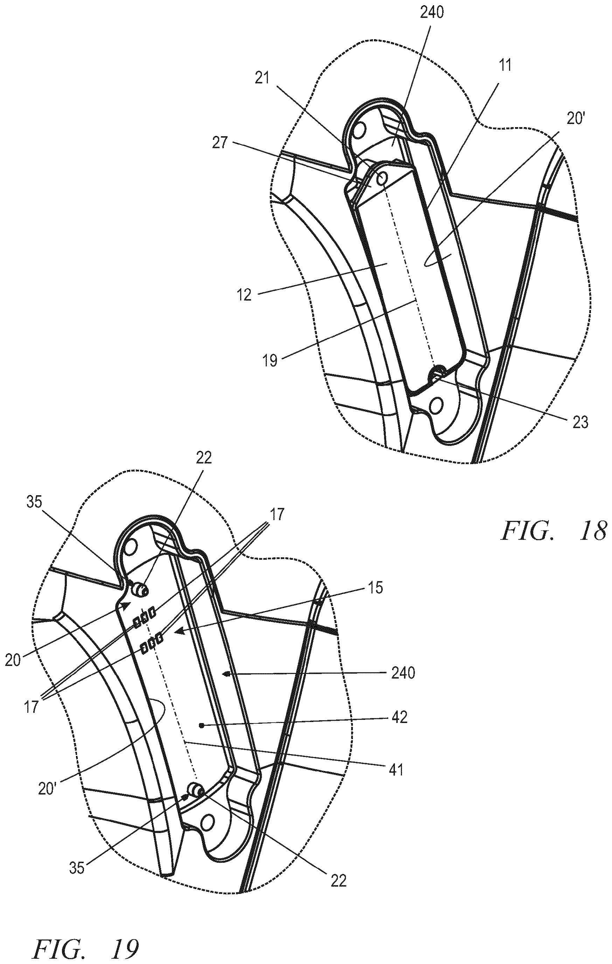

Die Fig. 18 und 19 zeigen den geöffneten Aufnahmeraum 240 des Gehäuses 205. In Figur 19 ist die Aufnahme 20 mit einem äußeren Rahmen 20' dargestellt, wobei die Lagefixierung des Kommunikationsmoduls 12 über die vorzugsweise als Zentrierstifte 22 und 24 ausgebildeten, vorzugsweise gehäusefesten Eingriffselemente 35 gewährleistet ist. Im Boden 42 der Aufnahme 20 ist ein Kontaktfeld 15 mit Kontakten 17 ausgebildet, über die eine elektrische Verbindung mit einer innerhalb des Gehäuses 105 vorgesehenen elektronischen Schaltung hergestellt werden kann. Die elektronische Schaltung kann zum Beispiel Leistungsdaten, Betriebsdauer, Restbetriebsdauer, Temperatur des verwendeten Akkupacks 1, die Spannung des Akkupacks und/oder den Betriebsstrom und dergleichen erfassen und an den Kontakten 17 zur Verfügung stellen.

Ein in die Aufnahme 20 eingesetztes Kommunikationsmodul 12 liegt mit seinen vorzugsweise als Kontaktfedern 18 ausgebildeten Kontaktelementen 14 auf den Kontakten 17 des Kontaktfeldes 15 im Boden 42 der Aufnahme 20 auf. Das ein eigenständiges Bauteil 11 bildende Kommunikationsmodul 12 weist Zentrieröffnungen 21 und 23 auf, in die die als Zentrierstifte 22 und 24 ausgebildeten Eingriffselemente 35 eingreifen. Dadurch wird das Kommunikationsmodul 12 innerhalb des Aufnahmeraums 240 und vorzugsweise innerhalb des Rahmens 20' in seiner Lage gehäusefest fixiert.

Der Aufnahmeraum 240 wird nach Einsetzen des Kommunikationsmoduls 12 durch den Verschlussdeckel 110 verschlossen, wobei zwischen dem Verschlussdeckel 210 und dem Kommunikationsmodul 12 ein Druckelement vorgesehen ist. Dieses Druckelement übt nach Festschrauben des Verschlussdeckels 210 eine Druckkraft auf das Bauteil 11 des Kommunikationsmoduls 12 aus, wodurch das Kommunikationsmodul 12 vibrationsfest in der Aufnahme 20 im Aufnahmeraum 140 fixiert ist. Das Druckelement kann ein Schaumstoffpad, ein Federelement oder dergleichen kompressibles Druckelement sein.

Wie in Figur 16 dargestellt, können über das Kommunikationsmodul 12 und die Funkverbindung 43 Daten zwischen dem Kommunikationsmodul 12 im Gehäuse 205 und einer äußeren Sende-und/oder Empfangseinheit 44 ausgetauscht werden. Die Funkverbindung ist insbesondere eine bidirektionale Funkverbindung 43.

## Patentansprüche

1. Gehäuse, insbesondere Gehäuse für einen Akkupack (1), für ein handgeführtes oder für ein handgetragenes Arbeitsgerät oder dgl. Gehäuse (5, 105, 205), mit unter einem Verschlussdeckel (10, 110, 210) vorgesehenen elektrischen Kontakten (17), die elektrisch mit im Gehäuse (5, 105, 205) angeordneten elektrischen Bauelementen kontaktiert sind,
**dadurch gekennzeichnet,**
∘ dass als selbstständiges Bauteil (11) auf die Kontakte (17) ein Kommunikationsmodul (12) aufgelegt ist,
∘ dass das Kommunikationsmodul (12) mit einer gehäusefesten Aufnahme (20) im Gehäuse (5, 105, 205) lagefixiert ist,
∘ dass das Kommunikationsmodul (12) eine den Kontakten (17) zugewandt liegende Kontaktseite (13) mit auf der Kontaktseite (13) vorgesehenen Kontaktelementen (14) aufweist,
∘ und die Kontaktelemente (14) des Kommunikationsmoduls (12) auf den Kontakten (17) im Gehäuse (5, 105, 205) elektrisch kontaktierend aufliegen,
∘ und dass das Kommunikationsmodul (12) mit zumindest einem Druckelement (16) auf die Kontakte (17) aufgedrückt ist,
∘ wobei das Druckelement (16) zwischen dem Verschlussdeckel (5, 105, 205) und dem Kommunikationsmodul (12) angeordnet ist.

2. Gehäuse nach Anspruch 1,
**dadurch gekennzeichnet, dass** das Kommunikationsmodul (12) eine rechteckige Grundform mit einer Längsachse (19) aufweist und die Kontaktelemente (14) des Kommunikationsmoduls (12) symmetrisch zur Längsachse (19) des Kommunikationsmoduls (12) liegen.

3. Gehäuse nach Anspruch 1 oder 2,
**dadurch gekennzeichnet, dass** die Kontaktelemente (14) des Kommunikationsmoduls (12) und/oder die unter dem Verschlussdeckel (10, 110, 210) vorgesehenen elektrischen Kontakte (17) als Kontaktfedern (18) ausgebildet sind.

4. Gehäuse nach einem der Ansprüche 1 bis 3,
**dadurch gekennzeichnet, dass** zwischen der gehäusefesten Aufnahme (20) und dem Kommunikationsmodul (12) zumindest ein mechanisches Eingriffselement (35) vorgesehen ist, und das Eingriffselement (35) ausgebildet ist, das Kommunikationsmodul (12) gehäusefest festzulegen.

5. Gehäuse nach Anspruch 4,
**dadurch gekennzeichnet, dass** das Eingriffselement (35) durch einen in eine Zentrieröffnung (21) eingreifenden Zentrierstift (22) gebildet ist.

6. Gehäuse nach Anspruch 5,
**dadurch gekennzeichnet, dass** das Kommunikationsmodul (12) die Zentrieröffnung (21) aufweist und der Zentrierstift (6) gehäusefest im Gehäuse (5, 105, 205) gehalten ist.

7. Gehäuse nach Anspruch 5 oder 6,
**dadurch gekennzeichnet, dass** das Kommunikationsmodul (12) eine erste Zentrieröffnung (21) für einen ersten Zentrierstift (22) und eine zweite Zentrieröffnung (23) für einen zweiten Zentrierstift (24) aufweist.

8. Gehäuse nach einem der Ansprüche 5 bis 7,
**dadurch gekennzeichnet, dass** das Kommunikationsmodul (12) eine rechteckige Grundform mit einer Längsachse (19) aufweist und die Zentrieröffnung (21, 23) auf der Längsachse (19) des Kommunikationsmoduls (12) liegt.

9. Gehäuse nach einem der Ansprüche 5 bis 8,
**dadurch gekennzeichnet, dass** die Zentrieröffnung (21, 23) im Bereich gegenüberliegender Schmalseiten (25) des Kommunikationsmoduls (12) vorgesehen ist.

10. Gehäuse nach Anspruch nach einem der Ansprüche 5 bis 9,
**dadurch gekennzeichnet, dass** die Zentrieröffnung (23) zur Schmalseite (25) des Kommunikationsmoduls (12) hin offen ist.

11. Gehäuse nach einem der Ansprüche 1 bis 10,
**dadurch gekennzeichnet, dass** das Druckelement (16) ein kompressibler Körper, insbesondere ein elastomerer Körper ist.

12. Gehäuse nach einem der Ansprüche 1 bis 11,
**dadurch gekennzeichnet, dass** die gehäusefesten Kontakte (17) auf einer Platine (6) angeordnet sind, wobei die Platine (6) eine einem Innenraum (2) des Gehäuses (5, 105, 205) zugewandt liegende innere Platinenseite (7) und eine dem Innenraum (2) abgewandt liegende äußere Platinenseite (8) aufweist, auf der die gehäusefesten Kontakte (17) vorgesehen sind.

13. Gehäuse nach Anspruch 12,
**dadurch gekennzeichnet, dass** die auf der äußeren Platinenseite (8) vorgesehenen Kontakte (17) als Kontaktfelder (15) der Platine (6) ausgebildet sind.

14. Gehäuse nach Anspruch 12 oder 13,
**dadurch gekennzeichnet, dass** der Innenraum (2) des Gehäuses (5, 105, 205) einen Aufnahmeraum für einen Zellverbund (3) bildet, und dass auf der Seite des Gehäusedeckels (30) die Platine (6) den Aufnahmeraum (20) des Zellverbundes (3) verschließt.

15. Gehäuse nach einem der Ansprüche 11 bis 14,
**dadurch gekennzeichnet, dass** die Platine (6) eine elektronische Überwachungseinrichtung (9) trägt, die elektrisch mit dem Zellverbund (3) des Akkupacks (1) verbunden ist.
